(19)

Europäisches
Patentamt
European
Patent Office
Office européen
des brevets

(11) **EP 3 023 919 A1**

(12) **EUROPEAN PATENT APPLICATION**

(43) Date of publication:
**25.05.2016 Bulletin 2016/21**

(51) Int Cl.:
**G06Q 10/06** *(2012.01)*

(21) Application number: **15195568.9**

(22) Date of filing: **20.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.11.2014 IN 3352MU2014**

(71) Applicant: **Tata Consultancy Services Ltd.
Mumbai 400 021, Maharashtra (IN)**

(72) Inventors:
• **SADAPHAL, Vaishali Paithankar
411 013 Pune (IN)**
• **NATU, Maitreya
411 013 Pune (IN)**

(74) Representative: **Regimbeau
20, rue de Chazelles
75847 Paris Cedex 17 (FR)**

(54) **METHOD AND SYSTEM FOR EFFICENT TRANSITION OF INFORMATION TECHNOLOGY OPERATIONS**

(57) This disclosure relates generally to computing devices, and more particularly to transition of IT operations. In one embodiment, a method and system is provided for generating an efficient transition plan for IT operations while addressing aspects such as coverage, risk, time, and cost. The IT operations are modeled through graphs and use well-defined problems in graph theory to build solutions. Heavy hitter issues are identified to maximize coverage. To minimize risk, severity of an issue is determined, wherein the severity is based on the instability caused or penalties associated with the issue. Further, transition time is minimized by finding issue-communities for parallel transition by finding maximum cliques. Yet further, the bin-packing algorithm is used to optimize the teams of resolvers and thus minimize cost. Finally, a transition plan is generated by systematically identifying issue communities for transition using the minimum hitting set and minimum vertex cover problem.

FIG. 2

**Description**

**CROSS-REFERENCE TO RELATED APPLICATIONS AND PRIORITY**

The present application claims priority to Indian Provisional Patent Application No. 3352/MUM/2014, filed on November 20th, 2014, the entirety of which is hereby incorporated by reference.

**FIELD OF THE INVENTION**

The present application generally relates to computing devices and particularly but not exclusively, to a method and system for transition of information technology (IT) operations from one service provider to another service provider.

**BACKGROUND OF THE INVENTION**

Information Technology (IT) of today's business is managed by IT service providers. These service providers perform a wide variety of tasks to ensure smooth running of business operations such as monitoring of application and infrastructure, attending service requests from users, managing changes, debugging performance problems, among others. The service providers perform these operations through teams of resolvers. These teams consist of a mix of people of different competencies and different levels of expertise. These teams very well understand the business operations, dependency of business on underlying IT, the frequently seen problems and their fixes. In an event of transition, where a new service provider takes over the operations from the existing service provider, capturing all this knowledge is a daunting task. As a result, it is absolutely critical to design crisp and comprehensive plan for transition that ensures complete, risk-free, and timely transition.

A majority of existing solutions for transition of IT operations relies on manual, intuition-driven and experience-centric approach. Teams from the two service providers work towards the process of knowledge transfer. The existing team identifies important knowledge items for transition and trains the new team. The new team identifies domain experts that can take the transition.

. However, the new team has no or minimal knowledge of activities performed by the existing team before transition. This approach is ad-hoc and entirely relies on the human expertise. It is risky and cannot cater to today's scale and rapidly changing environments.

Prior art literature have illustrated various experience centric approaches for transition of IT operations, however, analytics centric IT operations is still an unexplored dimension of transition planning.

**SUMMARY OF THE INVENTION**

Before the present methods, systems, and hardware enablement are described, it is to be understood that this invention is not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention which will be limited only by the appended claims.

The present application provides a method and system for comprising a processor configured to identify, one or more issues which occur during the transition of IT operations from service provider to another service provider. The method provides a computer implemented method for transition of Information Technology (IT) operations; comprising a processor configured to identify, one or more issues which occur during the transition of IT operations from service provider to another service provider; the processor is further configured to identify, one or more heavy hitter issues from the one or more issues. In one embodiment the one or more heavy hitter issues are issues which cover a maximum workload volume of IT operations. The processor is further configured to identify, risk associated with the one or more issues, by determining severity of the one or more issues. In an embodiment the severity of the one or more issues is based on the instability caused by the issue or the penalties associated with the issues. Further the processor is configured to identify, one or more similar issue communities. In an embodiment the one or more similar issue communities are determined by computing a similarity coefficient and constructing an issue similarity graph. The processor is further configured to identify, an optimal team size of resolvers. In an embodiment the optimal team size is determined by profiling type of activities performed by the resolvers; and further the processor is configured to implement, a transition plan wherein in an embodiment the transition plan is derived by analyzing identified heavy hitter issues, risk associated with the one or more issues, one or more similar issue communities and optimal team size of resolvers for transition of IT services.

In another the embodiment the present application discloses a system (102) for efficient transition of Information Technology (IT) operations. The system (102) comprises a processor and a memory comprising an issue identification module (210) configured to identify, one or more issues which occur during the transition of IT operations from service provider to another service provider. The system further comprises a coverage maximization module (212) configured to identify, one or more heavy hitter issues from the one or more issues. In an embodiment the one or more heavy hitter issues are issues which cover a maximum workload volume of IT operations. The system (102) further comprises a risk minimization module (214) configured to identify, risk associated with the one or more issues, by determining severity of the one or more issues. In an embodiment the severity of the one or more issues is based on the instability caused by the issue or the penalties associated with the issues. The system (102) further comprises a time minimization module (216) configured to identify one or more similar issue communities. In an embodiment the one or more similar issue communities are determined by computing a similarity coefficient and constructing an issue similarity graph. The system (102) further comprises a cost identification module (218) configured to identify, an optimal team size of resolvers. In an embodiment the optimal team size of resolvers is determined by profiling type of activities performed by the resolvers. Further the system (102) comprises a transition planning module (220) configured to implement a transition plan wherein the transition plan is derived by analyzing identified heavy hitter issues, risk associated with the one or more issues, one or more similar issue communities and optimal team size of resolvers for transition of IT services.

## BRIEF DESCRIPTION OF THE DRAWINGS

The foregoing summary, as well as the following detailed description of preferred embodiments, are better understood when read in conjunction with the appended drawings. For the purpose of illustrating the invention, there is shown in the drawings exemplary constructions of the invention; however, the invention is not limited to the specific methods and system disclosed. In the drawings:

Fig 1 illustrates a network implementation of a system for efficient transition of Information Technology (IT) operations, in accordance with an embodiment of the present subject matter;

Fig 2 illustrates the system for efficient transition of IT operations, in accordance with an embodiment of the present subject matter;

Fig. 3 illustrates issues and their computed coverage scores, according to an embodiment of the present subject matter;

Fig. 4 illustrates a graph with one issue connected to various relevant entities, according to an embodiment of the present subject matter;

Fig. 5(a) illustrates an example demonstrating the risk calculation for an issue, according to an embodiment of the present subject matter;

Fig. 5(b) illustrates issue similarity based on resolvers, according to an embodiment of the present subject matter;

Figs. 6(a) and 6(b) illustrate cliques in issue similarity graph that are identified as communities, according to an embodiment of the present subject matter;

Fig. 7 illustrates an example of bin-packing algorithm to identify minimum number of resolvers required to support the issue workload, according to an embodiment of the present subject matter;

Fig. 8 illustrates an example showing reduction of the Minimum Resolver Set problem to the Minimum Hitting Set problem, according to an embodiment of the present subject matter;

Fig. 9 illustrates an example showing use of the Minimum Vertex Cover to identify parallel tracks of communities, according to an embodiment of the present subject matter; and

Fig 10 illustrates a flow diagram showing the process of analytics based efficient transition as per an embodiment of the disclosed subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like, represent various processes which may be substantially represented in computer readable medium and so executed by a computer or processor, whether or not such computer or processor is explicitly shown.

## DETAILED DESCRIPTION OF THE INVENTION

Some embodiments of this invention, illustrating all its features, will now be discussed in detail.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.

The disclosed embodiments are merely exemplary of the invention, which may be embodied in various forms.

The elements illustrated in the Figures inter-operate as explained in more detail below. Before setting forth the detailed explanation, however, it is noted that all of the discussion below, regardless of the particular implementation being described, is exemplary in nature, rather than limiting. For example, although selected aspects, features, or components of the implementations are depicted as being stored in memories, all or part of the systems and methods consistent with the attrition warning system and method may be stored on, distributed across, or read from other machine-readable media.

The techniques described above may be implemented in one or more computer programs executing on (or executable by) a programmable computer including any combination of any number of the following: a processor, a storage medium readable and/or writable by the processor (including, for example, volatile and non-volatile memory and/or storage elements), plurality of input units, and plurality of output devices. Program code may be applied to input entered using any of the plurality of input units to perform the functions described and to generate an output displayed upon any of the plurality of output devices.

Each computer program within the scope of the claims below may be implemented in any programming language, such as assembly language, machine language, a high-level procedural programming language, or an object-oriented programming language. The programming language may, for example, be a compiled or interpreted programming language. Each such computer program may be implemented in a computer program product tangibly embodied in a machine-readable storage device for execution by a computer processor.

Method steps of the invention may be performed by one or more computer processors executing a program tangibly embodied on a computer-readable medium to perform functions of the invention by operating on input and generating output. Suitable processors include, by way of example, both general and special purpose microprocessors. Generally, the processor receives (reads) instructions and data from a memory (such as a read-only memory and/or a random access memory) and writes (stores) instructions and data to the memory. Storage devices suitable for tangibly embodying computer program instructions and data include, for example, all forms of non-volatile memory, such as semiconductor memory devices, including EPROM, EEPROM, and flash memory devices; magnetic disks such as internal hard disks and removable disks; magneto-optical disks; and CD-ROMs. Any of the foregoing may be supplemented by, or incorporated in, specially-designed ASICs (application-specific integrated circuits) or FPGAs (Field-Programmable Gate Arrays). A computer can generally also receive (read) programs and datas from, and write (store) programs and data to, a non-transitory computer-readable storage medium such as an internal disk (not shown) or a removable disk.

Any data disclosed herein may be implemented, for example, in one or more data structures tangibly stored on a non-transitory computer-readable medium. Embodiments of the invention may store such data in such data structure(s) and read such data from such data structure(s).

The present application provides a computer implemented method and system for efficient transition .of Information Technology (IT) operations from one service provider to another. More particularly, the system and method facilitates efficient, analytics based transition of IT operation from one service provider to another.

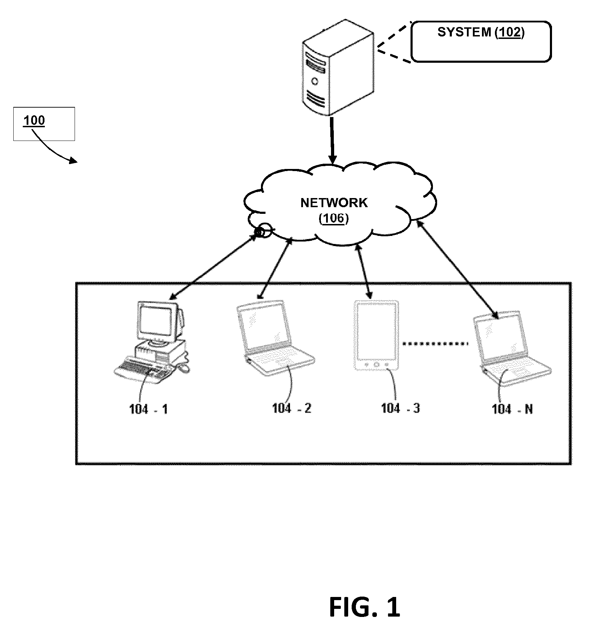

Referring now to Fig 1, a network implementation 100 of a system 102 for efficient transition of IT operations from one service provider to another is illustrated, in accordance with an embodiment of the present subject matter. Although the present subject matter is explained considering that the system 102 is implemented on a server, it may be understood that the system 102 may also be implemented in a variety of computing systems, such as a laptop computer, a desktop computer, a notebook, a workstation, a mainframe computer, a server, a network server, and the like. In one implementation, the system 102 may be implemented in a cloud-based environment. It will be understood that the system 102 may be accessed by multiple users through one or more user devices 104-1, 104-2...104-N, collectively referred to as user devices 104 hereinafter, or applications residing on the user devices 104. Examples of the user devices 104 may include, but are not limited to, a portable computer, a personal digital assistant, a handheld device, and a workstation. The user devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

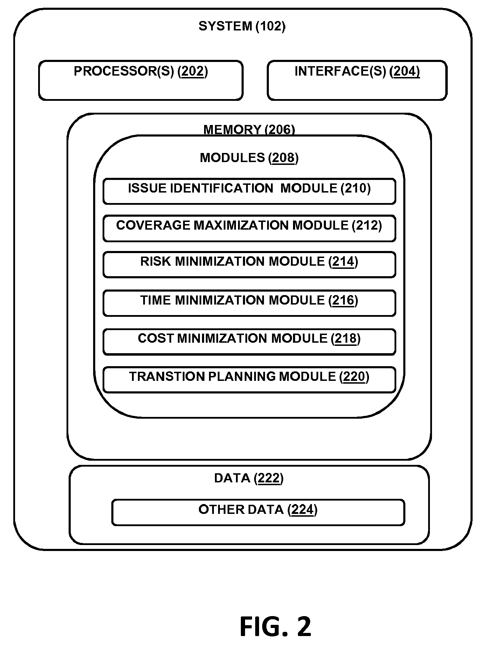

In one embodiment the present invention, referring to Fig 2, describes a detailed working of the various components of the system 102.

In one embodiment of the invention, referring to Fig 2 a system for efficient transition of IT operations from one service provider to another is disclosed. An issue identification module (210) identifies any issues that may occur during transition of IT operations from one service provider to another. A Coverage Maximization module (212) is configured to ensure that most, if not all, issues are covered by identifying heavy hitter issues, such that heavy hitter issues are issues that cover high volume issues, based on various criteria and implementing Borda count.. A Risk minimization module (214) is configured to identify high risk issues, i.e. issues with may have high penalties associated with them. Risk values may be propagated by making use of page rank algorithm and further identifying and prioritizing high risk issues. A Time minimization module (216) is configured to minimize the time for transition of IT operations. A similarity between issues is computed and issue similarity graphs are constructed, the communities of issues are then identified by identifying the maximum cliques in the graph. Thereafter similar issues are transitioned simultaneously while dissimilar issue communities undergo parallel transition. A Cost minimization module (218) is configured to profile resolvers based on the type of issues resolved by them and calculate an optimal team size in order to reduce cost. Further the cost minimization module (218) may be configured to introduce constraints such as ensuring redundancy among resolvers, avoiding overloading a resolver with too many tasks etc. A Transition planning module (220) configured to plan, transition track and prioritize the transition of issues based on the recommendation generated by the other modules. Further transition planner module may be configured to implement minimum hitting set and minimum vertex cover problems of graph theory to construct multiple sub-stages of the transition plan.

The present application provides a computer implemented methods and system for transition of information Technology (IT) operations from one service provider to another service provider.

The following detailed description uses the certain words which are defined hereunder

a) Issue: An issue refers to one specific type of problem addressed by a resolver. Some examples of issue could be files ystem is full; CPU utilization is high etc.

b) Resolver: A resolver refers to personnel in the service provider team that resolves the issue. Different resolvers are of different expertise and experience. Based on the experience, the resolvers are assigned to levels L1, L2, and L3, where L3 resolvers are the most experienced.

c) Ticket: A ticket refers to one specific instance of an issue. Ticket contains details of the issue, the inventory time, time-stamp, resolver, resolution steps, etc.

d) Inventory item: An inventory item refers to a hardware or software component where the issue is observed. Some examples of inventory items are specific application, database, server, network switch, etc.

The process of transition needs to address both IT systems as well as human systems. The IT systems involve the inventory of software and hardware components, the issues related to these components, knowledge of resolution of these issues, criticality of components with respect to business operations, service level agreements on performance of applications, etc. The human systems, on the other hand, involve the resolvers, their competencies, their experience, details of shift formations, etc.

In an example an IT system of a banking application that performs end of the day batch operations. Such systems typically consist of a set of batch jobs (applications) hosted in a mainframe environment. Various issues occur in this system such as job failure, job not starting in time, job taking too long to execute, file-system full, database connection failure, etc. These issues are resolved by a team of resolvers. Each issue requires a specific process of resolution e.g. in case where a job is running for a long time then the resolver checks for its root-cause such as unavailability of CPU or memory, job waiting for completion of other jobs, job waiting for third party feeds, etc. Based on the root-cause, the resolver takes appropriate actions to fix the problem such as preempting a resource, ensuring the third-party dependencies are met, etc.

As part of transition, one needs to understand various aspects of this environment such as the business-critical jobs, the issues observed in these jobs, frequent root-causes of these issues, their resolution procedure, etc. During a transition, a new team with domain expertise is employed, however the new team has no or minimal knowledge of activities performed by the existing team before the transition. This approach is ad-hoc, depends on human expertise and may prove risky and ineffective to cater to today's scale and rapidly changing environments.

In accordance with one embodiment of the analytics driven method for transition disclosed herein, the knowledge of IT and human system are profiled before transition so that a well-planned and informed transition can take place. A large amount of information about IT operations is logged in various data sources. Mining this information can provide many useful insights about the operations. In an example, all issues generated in an IT system are logged in the form of tickets. Each ticket contains attributes such as a problem description, ticket creation time, severity of the ticket, the IT component where the problem is observed, resolver that resolved the issue, the time to resolve the issue, the time to resolve the issue, details of the problem resolution etc.

This data may be mined and analytics may be applied to identify one or more *heavy hitter issues* that cover majority of the workload volume, one or more high risk issues that should be transitioned first, identifying which issues have similar resolution steps and may be transitioned together, matching resolvers with the issues of their expertise to get the right issues to the right resolvers for effective resolution and estimate the optimal number of people to best meet the workloads and the service level agreements (SLA's)

In an implementation, various entities and relationships involved in the IT operations can be effectively modeled as a graph. For instance, the inventory items, issues generated from these items, and the resolvers resolving these issues can be modeled as nodes of a graph. Edges between nodes indicate various relationships. For instance, edge between issue and inventory item indicates the source of origin of the issue. Edge between issue and resolver indicates the resolution expertise. Each node and edge can be associated with various attributes such as risk, persistence, recency, volume, among others.

In an embodiment various problems of transition planning may be mapped to well-defined problems in graph theory and set theory. In an embodiment these well-defined problems of graph theory and set theory include 1) Maximize coverage 2) Minimize risk 3) Minimize time of transition 4) Minimize cost. A detailed working of solutions for the abovementioned problems is explained in the following paragraphs.

In one embodiment, in order to maximize coverage, typical IT operations involving a variety of issues generated from various IT components such as applications database, file system etc. are considered. However in most cases a low percentage of issues (to the amount of 20%) cover a high percentage of the workload volume (to the amount of 80%) and hence identification of these 20% issues (referred to as heavy hitter issues) may lead to ensuring that maximum workload volume is covered at any given time. Thus, each issue may be evaluated on various criteria such as volume, persistence, regency and on various criteria such as volume, persistence, regency by using well known Borda count techniques to identify the heavy hitter issues.

In an embodiment the coverage maximization module (210) may be configured to identify heavy hitter issues based on the following three criteria, 1) Volume: Each issue may be assigned a score $mnC_v$ based on the number of tickets generated for that issue. The issue (s) with the smallest volume is assigned score=1 and subsequent issues are assigned 2, 3 onwards. 2) Persistence: A persistence score $C_p$ is assigned based on the number of days for which the issue occurred. 3) Recency: The issues with recent occurrences is more important than an old issues a recency score $C_r$ is assigned to an issue based on the last timestamp of the occurrence of the issue.

In an embodiment a the coverage maximization module (210) consolidates the score generated based on all three criteria using the Broda count as per the following equation -------(1)

$$C_{coverage} = \frac{\alpha * C_v + \beta * C_p + \gamma * C_r}{3} \qquad (1)$$

where $\alpha$, $\beta$, and $\gamma$ are the normalization constants. The normalization constants are used to ensure that ranks from all three criteria are in the same range. Further the coverage maximization module (210) may be configured to calculate a consolidated score and identify top issues as heavy hitter issues.

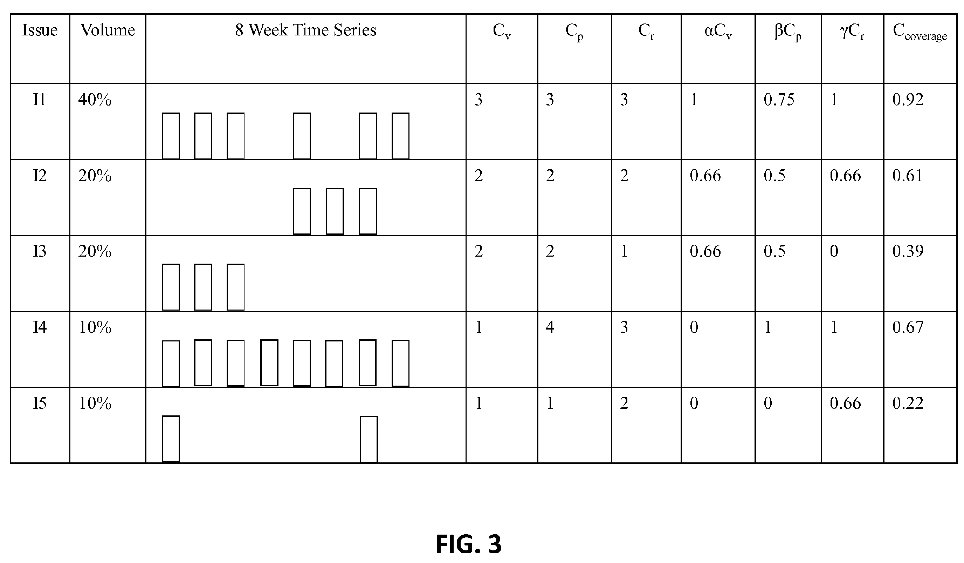

Figure 3 illustrates an exemplary embodiment of the above mentioned method for identification of heavy hitter issues. Figure 3 illustrates an example wherein five issues $I_1$, $I_2$, ............$I_5$. Referring to Figure 1 the volume of each issue along with an 8 week time series of weekly ticket count of each issue is shown. The proposed approach computes the scores $C_v$, $C_p$, and $C_r$ for each issue. The issue $I_4$ with highest volume of 40% is assigned the largest volume score, i.e., $C_v = 3$. The issue $I_4$ appears for the maximum number of weeks and is assigned the highest persistence score, i.e., $C_p = 4$. The issues $I_1$ and $I_4$ are observed in the most recent week and hence are assigned the highest regency score, i.e., $C_r = 3$.

All scores are normalized to a range of 0 to 1, and the consolidated score $C_{coverage}$ is computed as an average of the normalized scores, Based on the three criteria of volume, persistence and recency, issue Issue $I_1$ is assigned the highest score of 0.92 because issue $I_1$ is highest in volume and recency and second highest in persistence.

In an embodiment, since different issues have different levels of risk, for example a critical application issue can lead to higher penalties. In an embodiment in order to identify issues with higher risk the risk minimization module (212) is configured to 1) Defining the risk of an entity based on the number of entities referring to it. For instance, an issue generated from too many applications should be considered riskier than the one generated from fewer applications. 2) Defining the risk of an entity based on the risk of the entities referring to it. For instance, an issue generated from high risk or critical applications should be considered riskier than the one generated from low-risk applications.

In an embodiment the above mentioned approach may be implemented by configuring the risk minimization module (212) to, first creating a graph of all issues and their related entities. Entities may be any application or human resource, location, hosts etc. connected to one issue, wherein one entity may be connected to one or more issues.

The risk minimization module (212) may further be configured to construct an issue graph such that,

    a) A node is created for each issue
    b) For each issue, nodes are created for all relevant entities
    c) Edges are created between issue and its related entities
    d) Edges are created between related entities. In one example an edge between a location and a host refers to the location where the host machine is deployed.

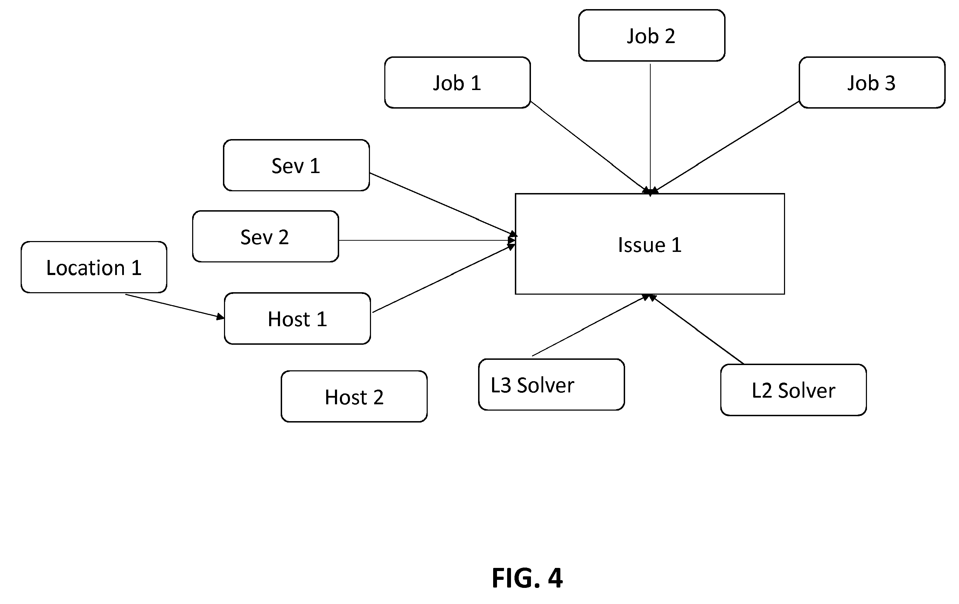

Fig 4 illustrates an exemplary embodiment in accordance with the disclosed subject matter. Issue q is connected to three jobs, two hosts, two types of severities, and two types of resolvers. Further the hosts are connected to locations.

In an embodiment, in order to minimize risk during transition of IT operations risk is computed for each entity based such that risk of some entities may be computed based on domain knowledge. For example business critical jobs may be assigned higher risk value, locations may be assigned risk scores based on the business needs. Similarly severity of high, medium, low are assigned predefined risk values.

Further risk of some entities may be derived from other entities. Also risk of an issue may be derived based on the entities associated with the issue.

In an embodiment, the risk minimization module (212) is configured it may identify two types of entities. Entities which indicate highest risk for entities with large number of instances, i.e. the issues coming from a large number of applications are riskier than the one from fewer applications. The risk minimization module (212) is configured to compute risk of an entity E, where high instances indicate high risk on equation (2)

$$K_i^E = \frac{\sum_{e \in E(i)} K(e)}{\sum_{e \in E(all)} K(e)} \qquad (2)$$

Further to risk minimization module (212) is configured to identify entities where fewer instances indicate highest risk (eg: Resolver i.e. an issue known to very few resolvers is riskier than the issues known to all the resolvers.) The risk minimization module (212) is configured to compute risk of such an entity E for issue i based on equation.... (3):

$$K_i^E = 1 - \frac{\sum_{e \in E(i)} K(e)}{\sum_{e \in E(all)} K(e)} \qquad (3)$$

Further the risk minimization module (212) is configured to compute final risk value for an issue as the sum of the normalized risks calculated from all mentioned items above by using the equation--- (4).

$$K^{resolver} = \sum_{e \in Entities} K_i^e \qquad (4)$$

In the above mentioned equations (2), (3) and (4), E(i) refers to the instances of entity E connected to issue i, and E(all) refers to all instances of that entity. K{e} refers to the risk associated with instance e. The above equation is thus the ratio of sum of risk of all instances associated with issue i and the sum of risk of all instances.

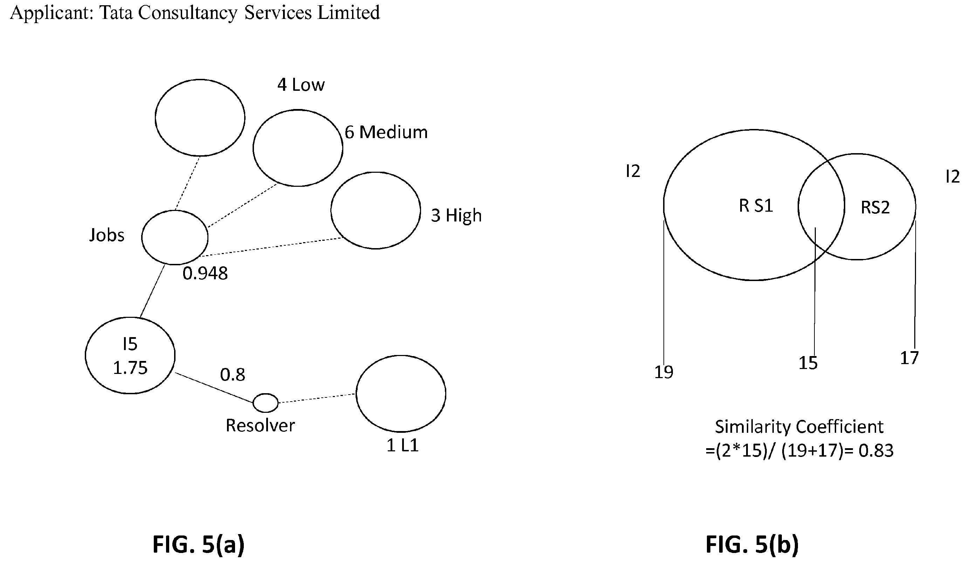

Figure 5 (a) illustrates an example for calculating risk as per an embodiment of the disclosed subject matter for the risk propagation graph of issue $I_5$. The value of $K^{job}$ is calculated in an environment where there are 6 jobs of criticality 1, 6 jobs of criticality 3, and 3 jobs of criticality 5. Further the environment contains an issue $I_5$, which is generated from 4 jobs of criticality 1, 6 of 3 and 3 of 5. Thus,

$$K^{job} = \frac{(1*4+3*6+5*3)}{(1*6+3*5+5*3)} = 0.948 \qquad (5)$$

Further to calculate $K^{resolver}$ where the issue is resolved by only 1 resolver out of 5 resolvers. Assuming a risk of 1 for all resolvers, the resolver risk is calculated as per equation (6)

$$K^{resolver} = 1 - \frac{(1*1)}{(5*1)} = 0.8 \qquad (6)$$

In an embodiment in order to minimize IT operations transition time the Time minimization module (214) is configured to identify (a) similar issues for simulations transition, and (b) communities of dissimilar issues for parallel transition. The time minimization module configured to identify two issues as similar if, the issues have similar resolution steps, issues that are generated from the same set of inventory items, issues that are resolved by the same set of resolver and issues that always co-occurs.

In order to identify similarity between issues on the basis of attribute, in an embodiment an attribute AV and two issues $I_i$ and $I_j$ may be considered in an IT environment such that the value of AV for $I_i$ and $I_j$ may be $AV_i$, and $AV_j$. The time minimization module is configured to identify similarity coefficient between two sets of attributes by using approaches such as Jaccard coefficient, Dice coefficient and the like. In an embodiment the attribute of commonality of elements is given twice the weightage of other attributes. The Dice coefficient between two sets $AV_i$ and $AV_j$ is computed as per equation (7)

$$2 * \frac{|AV_i \cap AV_j|}{|AV_i|+|AV_j|} \qquad (7)$$

Referring to figure 5(b) illustrates an example of computation of similarity between two issues $I_1$, $I_2$ wherein $RS_1$, $RS_2$, are sets of resolvers of issues $I_1$, $I_2$. Further referring to figure 3(b) . $|RS_1|$ = 19, $|RS_2|$ = 17. The number of common resolvers between $I_1$ and $I_2$, i.e., $RS_1 \cap RS_2$ = 15. The resulting coefficient of similarity is 0.83.

In an embodiment the time minimization is configured to construct an issue similarity graph in order to identify communities an issue-similarity graph is build. In an embodiment for constructing the issue similarity graph a node is constructed for each issue and an edge is inserted between two issues when their similarity coefficient is greater than a predefined threshold. The issue similarity graph is analyzed to identify communities of similar issues.

In an embodiment, the time minimization module (214) communities may be built using connected components, strongly connected components or cliques. Identification of maximum cliques in the issue-similarity graph is proposed in accordance with the present subject matter. That is, maximum cliques ensure maximum number of similar issues.

Due to the compute intensive nature of exploration of cliques, in an embodiment, the time minimization module (214) may be configured to identify the potential size of cliques by using the following set of rules derived from graph theory and set theory.

a) The size of maximum clique, $size_{max}Clique$ cannot be larger than ($degree_{max}$ +1), where $degree_{max}$ the maximum degree of the graph.
b) The graph must have x nodes with degree $\geq$ (x - 1) to contain a clique of size x, i.e. in an example, a clique of size 5 can exist if and only if there exist at least 5 nodes with degree $\geq$ 4.

In an embodiment the Time minimization module (214) may be configured such that Once the potential size of the cliques present in the graph are identified, the issues forming the maximum cliques are removed iteratively in a removed graph. Each clique identified by the iterative process is a community of similar issues.

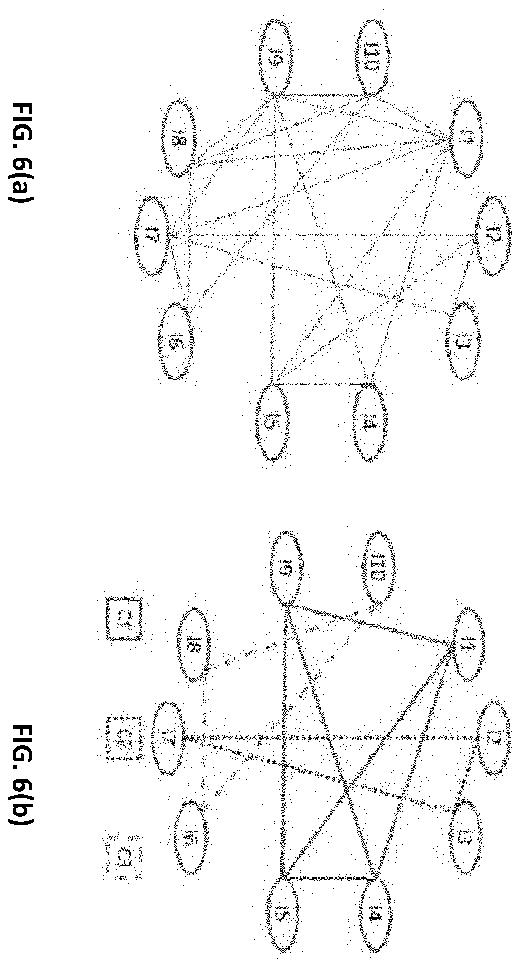

Referring to figure 6(a) and 6(b) an exemplary illustration of identification of issue similarity graphs and cliques is shown. The steps involved in iteratively searching for maximum cliques as illustrated in Fig 4(a) and Fig 4(b) following the above mentioned rules include, removing 7 as a candidate for maximum clique size as the maximum degree of the graph is 6 but the does not have 7 nodes with degree 6. Similarly 6 and 5 can also be removed as candidates for maximum number of cliques. Therefore as per figures 4(a) and 4(b) the candidates for the maximum clique size are {4,3,2}. A clique or community C\ of size 4 is identified. Once C\ is identified C\ and corresponding edges from the issue similarity graphs are removed. Further referring to figure 4(a) and 4(b) C2 and C3 are identified as two communities of size three each and further removes them and the process is followed iteratively.

In order to minimize cost of the IT operations transition in an embodiment of the subject matter disclosed herein, a cost minimization module (216) may be configured to identifying the right size of resolver team for minimizing cost. In an embodiment, the cost minimization module (216) may be configured such that the effort required in resolution of an issue is estimated by using historically logged attributes of issues. In an embodiment this logged information may include information form tickets logged for resolution of each issue in the IT operations system. The effort required to resolve an issue may be used for computing an amount of time a resolver needs to resolve an issue and a minimum number of required resolver to resolve an issue.

In an embodiment the cost reduction module (216) is configured to employ a Minimum Bin packing algorithm to compute the minimum number of resolvers for an issue, wherein the Minimum Bin packing algorithm may be defined such that a bin "S" of size "V" and a list of n issues $a_1,...,$ an is provide where the smallest number of bins "B" and a B-partition $S_1$ U ... $US_B$ of the set {1, ..., n} such that $\Sigma_{iESk}\, a_i \leq V$ for *all* $k$ = 1,.................B is to be determined.

In an embodiment resolvers may spend $e_i$ effort on an issue $I_i$ for H hours such that $e_i$ is mapped to an issue $a_i$ and the H hours are mapped to a bin size V. Further minimal bin packing is applied to identify the smallest number of bins in which all the issues can be packed. The number of bins so computed provide the smallest number of resolvers that can cater to the workload of the issues.

Further in another embodiment computing the minimum number of resolvers may cater to addition constraints such as resolver redundancy i.e. backup resolvers may be made available for important issues by making sure that resolution of an issue is known to "k" resolvers. For this the cost reduction module may be configured to split an issue $I_i$ with effort $e_i$ may be into "k" sub issues each with the effort $ek_i$ and these sub-issues are packed into bins while insuring that a same issue is not assigned to a same resolver twice.

In yet another embodiment, the additional constrain may include that a resolver can only be assigned a predetermined maximum number of issues. The assignment of a predefined maximum number of issues constraint may be implemented in an embodiment by limiting the maximum number of issues that may be packed in a bin.

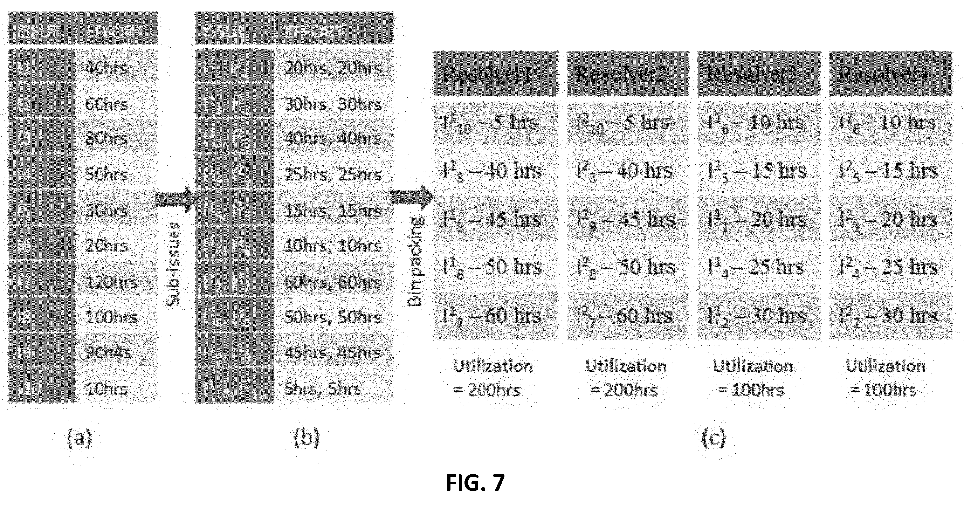

In an exemplary embodiment of the disclosed subject matter shown in Fig 7, where the time for which a resolver worker is H=200 hours per month. Table in Fig 7(a) shows the efforts spent on each issue and the resolver redundancy factor is 2, i.e., each issue must be known to at least 2 resolvers and to accommodate the requirement of at least two resolvers each issue is split into 2 sub-issues. Further Fig 7 (b) shows the sub-issues and their efforts. The constraint on maximum number that can be assigned to a resolver is 8. The bin packing algorithm is applied and identifies the need of 4 resolvers (bins) to support these issues. The details of how issues are assigned to resolvers are further illustrated in Fig 7(c).

In an embodiment of the disclosed subject matter, the transition planning module (218) is configured to compute and estimate the results from the other modules for the purpose of maximizing coverage, minimizing risk, minimizing time and minimizing cost are consolidated to generate a transition planner.

Although in an ideal setting, each community of dissimilar issue identified for minimizing time may be transitioned in parallel, i.e. be resolved by a set of resolver who are expert in the issues, however in an embodiment wherein the number of resolvers is limited it may not be possible to resolve each set of community in parallel.

In an embodiment where the number of resolvers are limited a transition planning module (218) may be configured to include identification of a smallest set of resolvers (Minimum resolver set) that can give transition for all issues in a community. The minimum resolver set may be identified by reducing the minimum resolver set to a Minimum hitting set problem wherein for a collection C of subset of a finite set S, a hitting set H $\subseteq$ S of least cardinality for C is identified such that A set H $\subseteq$ S is a hitting set of C if it contains at least one element from each subset in C. A set of resolvers may be constructed for each issue, where the set contains resolvers who are expert in resolving the each issue.

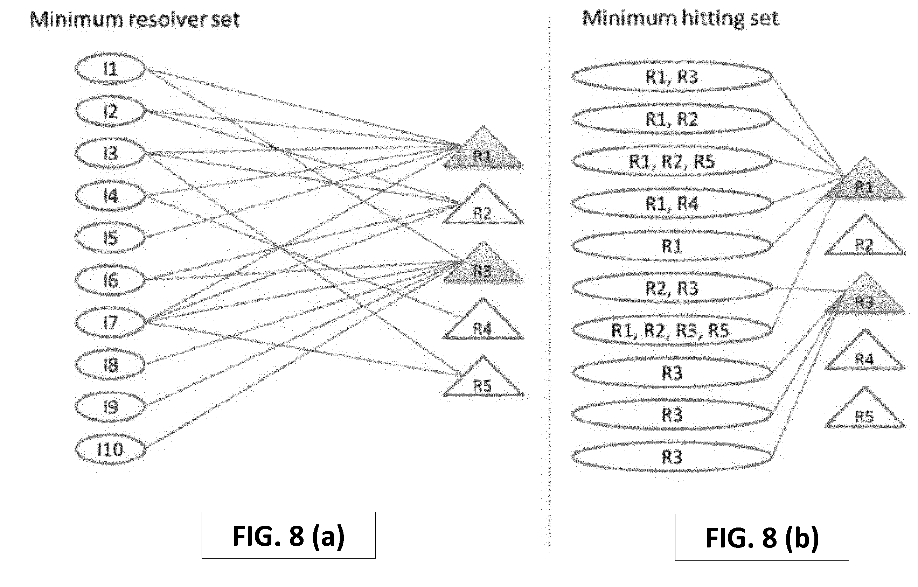

In an embodiment, figure 8 is an exemplary illustration of the reduction of a Minimum resolver set (MRS) to Minimum Hitting set (MHS) is shown. As illustrated by Fig 6 The resolvers R1, ... , R5 from the five elements in the minimum hitting set instance. Each issue in MRS translated to a set of resolvers in MHS for instance, issue I1 may be resolved by resolvers R1 and R3, and therefore the issue I1 is identified by a set {R1, R3}. This set of resolvers provide the smallest set of resolvers that can give transition for all the issues in the community.

Further in another embodiment the minimum hitting set may be so identified that that maximum parallelization of transition is ensured i.e. resolver set of communities may be identified such that the resolver such least overlap with each other. In an embodiment in order to achieve maximum parallelization a weighted minimum hitting set may be computed such that the weight of 0 to each resolver is initialized. The weight of each resolver that is selected for a community is then increased and while selecting the minimum hitting set, a set of resolvers with least weight is selected. The weighted minimum hitting set may be computed such that the communities are ranked based on the rank of the coverage and risk of their constituent issues. A community with the highest rank is identified and a weighted minimum resolver set is selected. Weight of the resolver set is increased and the steps are repeated till all communities are covered.

Further in another embodiment once the communities of issues and the required set of resolvers are identified the groups of communities which do not require any common resolvers are identified next so that each such group can take transition in parallel and hence can form a single stage in the transition plan.

Further in an embodiment of the subject matter disclosed herein, the various stages of transition of IT operations may be identified such that a graph with each node as a community and an edge representing one or more common resolvers between the communities is constructed. The disconnected communities are identified by identifying a minimum vertex cover within the constructed graph. Any communities not forming the vertex cover may be identified as independent and may form a single stage of transition. The communities identified as single stage of transition are removed from the community graph, and the process of identifying disconnected communities is repeated until all the communities are covered.

Further in another embodiment a rank of each transition stage is computed based on the rank of coverage and risk of each community within a stage. This rank is used to prioritize stages for transition such that preference may be given to a community with higher coverage and risk.

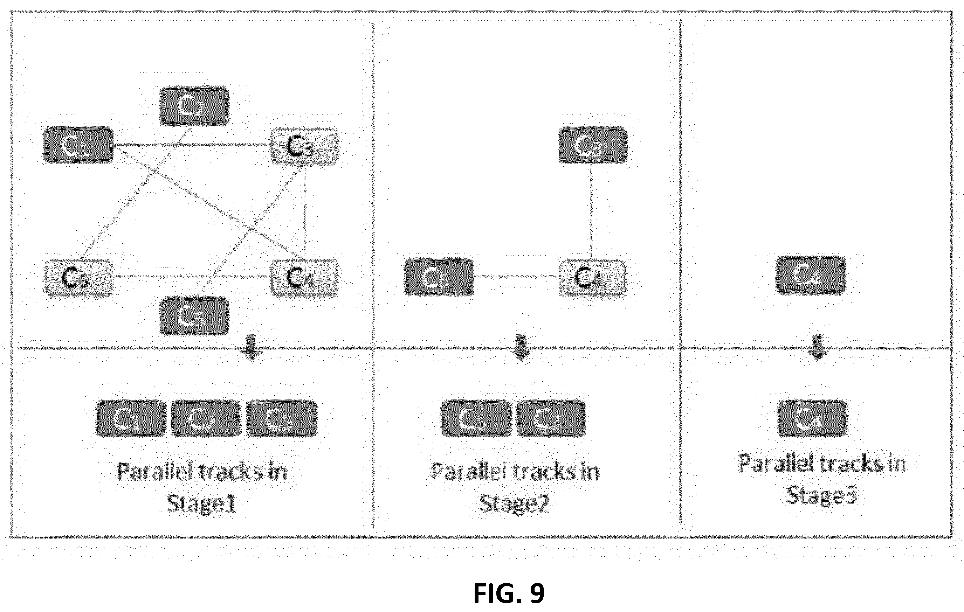

In an embodiment illustrated in Fig 9 where a community graph of six communities $C_1$, $C_2$, $C_3$, $C_4$, $C_5$, and $C_6$ is shown. The communities $C_1$, $C_2$, and $C_5$ can be taken up for parallel transition in stage 1. Once $C_1$, $C_2$, and $C_5$ are removed community $C_4$ forms the vertex cover and hence $C_3$, $C_6$ can be taken up for transition in stage 2 and lastly community $C_4$ can be taken up for transition in stage 3. The order of the three transition stages may be decided based on the coverage and risk of communities of each stage.

Although embodiments for methods and systems for the present subject matter have been described in a language specific to structural features and/or methods, it is to be understood that the present subject matter is not necessarily limited to the specific features or methods described. Rather, the specific features and methods are disclosed as exemplary embodiments for the present subject matter.

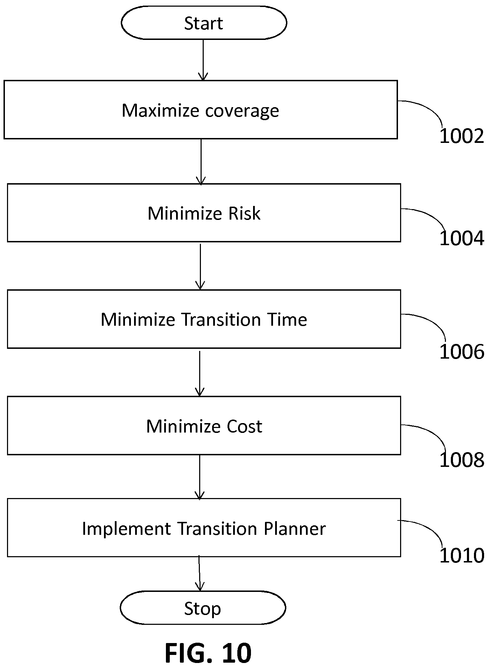

Figure 10 is a flowchart illustrating the method for transition of IT operations as per an embodiment of the subject matter disclosed herein. As per the illustration of Fig 10 the IT operations are modelled using graph theory and solutions are provided using defined problems in graph theory.

The process starts at step 1002, wherein the coverage maximization is performed wherein coverage maximization ensure that most, if not all, issues are covered by identifying heavy hitter issues, such that heavy hitter issues are issues that cover high volume issues, based on various criteria and implementing Borda count.

At the step 1004, issues which are not heavy hitter issues but have a high risk associated with them are identified by computing the risk associated with all the issues. Risk values may be propagated by making use of page rank algorithm and further identifying and prioritizing high risk issues.

At the step 1006, in order to minimize the time for transition of IT operations a similarity between issues is computed and issue similarity graphs are constructed, the communities of issues are then identified by identifying the maximum cliques in the graph. Thereafter similar issues are transitioned simultaneously while dissimilar issue communities undergo parallel transition.

At the step 1008, resolvers are profiled based on the type of issues resolved by them and calculate an optimal team size in order to minimize cost, by implementing the Minimal Bin packing problem. Further the Minimum Bin packing solution may be customized to introduce constraints such as ensuring redundancy among resolvers, avoiding overloading a resolver with too many tasks etc.

The process ends at the step 1010, wherein the recommendations from the four objectives are combined by using a transition planner. The transition planner carefully plans, transition tracks and prioritizes the issues based on the recommendation generated at the previous steps. Further minimum hitting set and minimum vertex cover problems may be implemented for constructing multiple sub-stages of the transition plan.

It will be appreciated by a person skilled in the art that although the method of figure 8 illustrates a method of working the disclosed subject matter, however the method may be used in any order with omissions of one or more steps or by performing any step in any order and the same forms a part of the disclosed subject matter.

It is intended that the disclosure and examples be considered as exemplary only, with a true scope and spirit of disclosed embodiments being indicated by the following claims.

**Claims**

1. A method for transition of Information Technology (IT) operations; said method comprising processor implemented steps of:

    identifying, one or more issues which occur during the transition of IT operations from service provider to another service provider;
    identifying, one or more heavy hitter issues from the one or more issues, wherein the one or more heavy hitter issues are issues which cover a maximum workload volume of IT operations;

identifying, risk associated with the one or more issues, by determining severity of the one or more issues, wherein the severity of the one or more issues is based on the instability caused by the issue or the penalties associated with the issues;

identifying, one or more similar issue communities, wherein the one or more similar issue communities are determined by computing a similarity coefficient and constructing an issue similarity graph;

identifying, an optimal team size of resolvers, wherein the optimal team size is determined by profiling type of activities performed by the resolvers; and

implementing, a transition plan wherein the transition plan is derived by analyzing identified heavy hitter issues, risk associated with the one or more issues, one or more similar issue communities and optimal team size of resolvers for transition of IT services.

2. The method according to claim 1 wherein identification of the one or more heavy hitter issue is based on a volume, a persistence and a recency of the one or more issues, wherein the volume refers to number of time an issue has occurred, the persistence refers to number of days for which the issue has occurred and recency refers to how recently the issue has occurred; and wherein identification of the one or more heavy hitter issue comprises implementing Borda Count to compute a consolidated score for each issue based on volume, recency and persistence of the each issue and rank the each issue as heavy hitter issues based on the consolidated score.

3. The method according claim 1 wherein determining the severity of the one or more issue comprises:

creating a graph for all issues and corresponding related entities, wherein related entities comprises resolvers, inventory items, locations, hosts;

assigning risk value for all the issues based on the number of edges associated with each issue and the corresponding entities.

4. The method according to Claim 1 wherein determining similarity between two or more issues comprises:

identifying similarity based on one or more attributes associated with said two or more issues, wherein attributes comprises similar resolution steps, generation from a same inventory items, resolution by same resolvers, co-occurrence; and

computing similarity coefficient for said two or more issues based on corresponding attributes wherein the similarity coefficient is a Dice coefficient for said two or more issues and corresponding attributes.

5. The method according to claim 4 wherein determining similarity between issue communities comprises:

creating an issue similarity graph wherein each issue is assigned to a node and an edge joins two nodes when the value of similarity coefficient for issues corresponding to the nodes is above a predefined threshold;

identifying one or more cliques in the issue similarity graph, wherein the one or more cliques are subgraphs of the issue similarity graph such that all nodes of the a clique are connected with each other by an edge;

computing a maximum clique size such that the maximum clique size is not more than one numerical value higher than a maximum degree of the issue similarity graph and further the number of nodes on a clique must be less than total number of nodes of the issue similarity graph;

identifying a maximum clique based on the maximum clique size and iteratively repeating the identification after removing the identified maximum clique from the issue similarity graph to identify a second maximum clique wherein each identified clique is identified as a community of similar issues.

6. The method according to claim 1 wherein profiling type of activities performed by the resolvers comprises:

analyzing, historical data related to a resolver wherein historical data comprises information such as issue description, ticket generation time, time taken to resolve various different issues;

estimating, based on the historical data, effort required to resolve one issue, time required to resolve one issue; and

computing, a minimum number of resolvers required to support an issue workload by implementing a minimum bin packing algorithm, and wherein the method of claim 7 wherein the minimum number of resolvers is computed such that more than one resolver knows the resolution of each issue and each resolver resolves a predefined maximum number of issues.

7. The method according to claim 1 wherein combining all information for efficient transition of IT operations to derive a transition plan comprises:

identifying, a smallest set of resolver for transition of each issue community by implementing a minimum hitting set problem such that a set of resolvers is identified for each issue of an issue community wherein the set of resolvers are a smallest set that can give transition for all issues in an issue community; and

identifying, independent issue communities, wherein independent issue communities are two or more groups of issue communities which do not require any common resolvers and wherein identification of the group of independent issue communities comprises:

constructing, a community graph wherein each node represents one issue community and an edge between a two nodes represents a common resolver for the two issue communities represented by the two nodes;

identifying, independent issue communities by implementing single vertex cover, to identify disconnected nodes, wherein disconnected nodes correspond to independent issue communities;

removing, iteratively, nodes and edges of the disconnected issue communities and identifying another disconnected nodes corresponding to other independent issue communities for a remaining community graph.

8. The method according to claim 7 further comprising computing a weighted minimum hitting set of resolvers comprising processor implemented steps of:

assigning, weight to a resolver based on the number of communities associated with the resolver;

ranking, the issue communities based on the rank and coverage of their constituent issues;

identifying, the risk community with the highest ranking and selecting, a minimum resolver set for the community such that the selected minimum resolver set has a minimum weight compared to the other resolver sets;

removing, iteratively, the issue community for which resolver set is selected from the ranked issue communities and selecting minimum weighted resolver for the second highest ranking issue community.

9. The system (102) for efficient transition of Information Technology (IT) operations; said system comprising a processor and a memory comprising:

an issue identification module (210) configured to identify, one or more issues which occur during the transition of IT operations from service provider to another service provider

a coverage maximization module (212) configured to identify, one or more heavy hitter issues from the one or more issues, wherein the one or more heavy hitter issues are issues which cover a maximum workload volume of IT operations;

a risk minimization module (214) configured to identify, risk associated with the one or more issues, by determining severity of the one or more issues, wherein the severity of the one or more issues is based on the instability caused by the issue or the penalties associated with the issues;

a time minimization module (216), configured to identify, one or more similar issue communities, wherein the one or more similar issue communities are determined by computing a similarity coefficient and constructing an issue similarity graph;

a cost identification module (218) configured to identify, an optimal team size of resolvers, wherein the optimal team size is determined by profiling type of activities performed by the resolvers; and

a transition planning module (220) configured to implement a transition plan wherein the transition plan is derived by analyzing identified heavy hitter issues, risk associated with the one or more issues, one or more similar issue communities and optimal team size of resolvers for transition of IT services.

10. The system according to claim 9 wherein the coverage maximization module (212) is further configured to identify the one or more heavy hitter issue is based on volume, persistence and recency of the one or more issue, wherein volume refers to number of time an issue has occurred, persistence refers to number of days for which the issue has occurred and recency refers to how recently an issue has occurred; and wherein the coverage maximization module (212) is further configured to identify the one or more heavy hitter issue by implementing Borda Count to compute a consolidated score for each issue based on volume, recency and persistence of the each issue and rank the each issue as heavy hitter issues based on the consolidated score.

11. The system according to claim 9 wherein the risk minimization module (214) is configured to determine the severity of the one or more issue by:

creating a graph for all issues and corresponding related entities, wherein related entities comprises resolvers, inventory items, locations, hosts;
assigning risk value for all the issues based on the number of edges associated with each issue and the corresponding entities.

12. The system according to Claim 9 wherein the time minimization module (216) is configured to determine similarity between two or more issues by:

identifying similarity based on attributes associated with said two or more issues, wherein attributes comprises similar resolution steps, generation from a same inventory items, resolution by same resolvers, co-occurrence; and
computing similarity coefficient for said issues based on corresponding attributes wherein the similarity coefficient is a Dice coefficient for said two or more issues and corresponding attributes.

13. The system according to claim 12 wherein the time minimization module (218) is configured to determine similarity between issue communities by:

creating an issue similarity graph wherein each issue is assigned to a node and an edge joins two nodes when the value of similarity coefficient for issues corresponding to nodes is above a predefined threshold;
identifying one or more cliques in the issue similarity graph, wherein the one or more cliques are subgraphs of the issue similarity graph such that all nodes of the a clique are connected with each other by an edge;
computing a maximum clique size such that the maximum clique size is not more than one numerical value higher than a maximum degree of the issue similarity graph and further the number of nodes on a clique must be less than total number of nodes of the issue similarity graph;
identifying a maximum clique based on the maximum clique size and iteratively repeating the identification after removing the identified maximum clique from the issue similarity graph to identify a second maximum clique wherein each identified clique is identified as a community of similar issues.

14. The system according to claim 9 wherein the cost minimization module (218) is configured to profile type of activities performed by the resolvers by:

analyzing, historical data related to a resolver wherein historical data comprises information such as issue description, ticket generation time, time taken to resolve various different issues;
estimating, based on the historical data, effort required to resolve one issue, time required to resolve one issue; and
computing, a minimum number of resolvers required to support an issue workload by implementing a minimum bin packing algorithm; and wherein the cost minimization module (218) is configured to the minimum number of resolvers may be computed such that more than one resolver knows the resolution of each issue and each resolver resolves a predefined maximum number of issues.

15. The system according to claim 9 wherein the transition planning module (220) is configured to combine all information generated by the coverage maximization module, the risk minimization module, the time minimization module and the cost minimization module for efficient transition of IT operations by:

identifying, a smallest set of resolver for transition of each issue community by implementing a minimum hitting set problem such that a set of resolvers is identified for each issue of an issue community wherein the set of resolvers are a smallest set that can give transition for all issues in an issue community; and
identifying, independent issue communities, wherein independent issue communities are two or more groups of issue communities which do not require any common resolvers and wherein identification of the group of independent issue communities comprises:

constructing, a community graph wherein each node represents one issue community and an edge between a two nodes represents a common resolver for the two issue communities represented by the two nodes;
identifying, independent issue communities by implementing single vertex cover, to identify disconnected nodes, wherein disconnected nodes correspond to independent issue communities;
removing, iteratively, nodes and edges of the disconnected issue communities and identifying another disconnected nodes corresponding to other independent issue communities for a remaining community graph.

EP 3 023 919 A1

SYSTEM (102)

100

NETWORK
(106)

104 - 1     104 - 2     104 - 3     104 - N

**FIG. 1**

**FIG. 2**

SYSTEM (102)

PROCESSOR(S) (202)

INTERFACE(S) (204)

MEMORY (206)

MODULES (208)

ISSUE IDENTIFICATION MODULE (210)

COVERAGE MAXIMIZATION MODULE (212)

RISK MINIMIZATION MODULE (214)

TIME MINIMIZATION MODULE (216)

COST MINIMIZATION MODULE (218)

TRANSTION PLANNING MODULE (220)

DATA (222)

OTHER DATA (224)

| Issue | Volume | 8 Week Time Series | $C_v$ | $C_p$ | $C_r$ | $\alpha C_v$ | $\beta C_p$ | $\gamma C_r$ | $C_{coverage}$ |
|-------|--------|--------------------|-------|-------|-------|--------------|-------------|--------------|----------------|
| I1 | 40% | | 3 | 3 | 3 | 1 | 0.75 | 1 | 0.92 |
| I2 | 20% | | 2 | 2 | 2 | 0.66 | 0.5 | 0.66 | 0.61 |
| I3 | 20% | | 2 | 2 | 1 | 0.66 | 0.5 | 0 | 0.39 |
| I4 | 10% | | 1 | 4 | 3 | 0 | 1 | 1 | 0.67 |
| I5 | 10% | | 1 | 1 | 2 | 0 | 0 | 0.66 | 0.22 |

**FIG. 3**

**FIG. 4**

FIG. 5(a)

Similarity Coefficient
=(2*15)/ (19+17)= 0.83

FIG. 5(b)

FIG. 6(a)

FIG. 6(b)

FIG. 7

# FIG. 8 (a)

Minimum resolver set

# FIG. 8 (b)

Minimum hitting set

FIG. 9

```
                        ┌──────────────┐
                        │    Start     │
                        └──────┬───────┘
                               │
                               ▼
        ┌──────────────────────────────────────────────┐
        │              Maximize coverage               │
        └──────────────────────────────────────────────┘ ⟍ 1002
                               │
                               ▼
        ┌──────────────────────────────────────────────┐
        │                Minimize Risk                 │
        └──────────────────────────────────────────────┘ ⟍ 1004
                               │
                               ▼
        ┌──────────────────────────────────────────────┐
        │           Minimize Transition Time           │
        └──────────────────────────────────────────────┘ ⟍ 1006
                               │
                               ▼
        ┌──────────────────────────────────────────────┐
        │                Minimize Cost                 │
        └──────────────────────────────────────────────┘ ⟍ 1008
                               │
                               ▼
        ┌──────────────────────────────────────────────┐
        │         Implement Transition Planner         │
        └──────────────────────────────────────────────┘ ⟍ 1010
                               │
                               ▼
                        ┌──────────────┐
                        │     Stop     │
                        └──────────────┘
```

**FIG. 10**

Europäisches Patentamt

European Patent Office

Office européen des brevets

## EUROPEAN SEARCH REPORT

Application Number

EP 15 19 5568

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is so well-known that its existence at the relevant date cannot reasonably be disputed. The claimed technical features, namely a data processing system with a processor and a memory, are therefore considered to be part of the notorious knowledge, for which no documentary evidence is deemed necessary. (see Guidelines for Examination in the European Patent Office, B-VIII, 2.2.1)<br><br>----- | | INV.<br>G06Q10/06 |

TECHNICAL FIELDS
SEARCHED (IPC)

G06Q

The present search report has been drawn up for all claims

| Place of search | Date of completion of the search | Examiner |
|---|---|---|
| The Hague | 21 March 2016 | De Smet, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 3352MUM2014